# EUROPÄISCHE PATENTSCHRIFT

(11) **EP 4 485 716 B1**
(45) Veröffentlichungstag und Bekanntmachung des Hinweises auf die Patenterteilung: **05.08.2026**
(21) Anmeldenummer: 23181343.7
(22) Anmeldetag: 26.06.2023
(51) Int. Cl.: H01R 43/00, H01R 43/28, H01R 13/52, H02G 1/14

(54) **TÜLLENMODUL**
SPOUT MODULE
MODULE PASSE-FIL

(43) Veröffentlichungstag der Anmeldung: 01.01.2025
(73) Patentinhaber: komax Holding AG, 6036 Dierikon (CH)
(72) Erfinder: De Bastiani, Franco, 8800 Thalwil (CH)
(74) Vertreter: Inventio AG

(56) Entgegenhaltungen:
- EP-A1- 3 651 288
- JP-A- H05 299 149
- US-A- 2 661 866

## Beschreibung

Die Erfindung betrifft eine Tüllenmodul gemäss dem Oberbegriff von Anspruch 1. Mit Tüllenmodulen oder Tüllenstationen zur Bestückung von Kabeln können Tüllen, die beispielsweise für feuchtigkeitsdichte Durchführungen von elektrischen Kabeln durch Steckergehäuse oder Gehäusewände von Elektroapparaten benötigt werden, rationell auf Kabel gebracht werden.

Tüllen sind Dichtelemente beispielsweise aus Silikon, die in der Regel eingesetzt werden, um Steckergehäuse abzudichten. Bei der Konfektionierung von Kabeln können Kabel abgelängt und abisoliert, mit Tüllen bestückt, gecrimpt und gegebenenfalls mit Gehäusen versehen werden. Dazu wird ein abisoliertes Kabel mit einer Tülle bestückt, danach wird in der Regel ein Metallkontakt angecrimpt. Dieser Crimpkontakt ist dabei so ausgebildet, dass er die Tülle auf dem Kabel festhält. Die Tüllenbestückung wird auf vollautomatischen Kabelkonfektionieranlagen mit Tüllenbestückungsstationen ausgeführt, wobei die Tüllen üblicherweise als Schüttgut in die Tüllenbestückungsstation gegeben werden. Es sind auch Halbautomaten für Kabelkonfektionieranlagen bekannt (hier wird das Kabel von Hand eingelegt), welche neben anderen Operationen das Bestücken von Tüllen ausführen können. Insbesondere bei Vollautomaten ist es vorteilhaft, wenn die Umrüstung der Tüllenstation von einer Tüllenvariante auf eine andere schnell und ohne Fehler erfolgen kann.

Ein gattungsmässig vergleichbares Tüllenmodul ist in der EP 1 689 049 A1 gezeigt. Das Tüllenmodul ist bildet eine Tüllenstation, die einen Tüllenspeicher mit einer mit Tüllen befüllten Trommel und eine Tüllenbestückungseinrichtung zum Bestücken eines abisolierten Kabelendes eines Kabels mit einer Tülle umfasst. Der Tüllenspeicher gehört zu einer Tüllenbereitstellungseinrichtung zum Bereitstellung von Tüllen für die Bestückung, welche Tüllenbestückungseinrichtung weiter eine Förderschiene eines Schwingförderer umfasst. Mit der Förderschiene erfolgt ein Sortieren und Puffern der Tüllen. Am Ende der Pufferstrecke entnimmt die Tüllenbestückungseinrichtung eine einzelne Tülle um diese auf das Kabel zu bestücken. Über die Förderschiene werden die Tüllen lagerichtig zu einer Vereinzelungseinheit gefördert, von welcher Tüllen jeweils einzeln auf einen Dorn einer vier Dorne umfassenden drehbaren Transfereinheit aufgeschoben werden. Neben der erwähnten Transfereinheit mit den vier Dornen umfasst die Tüllenbestückungseinrichtung weiter einen Bestückungskopf mit einer Spreizhülse und einem Tüllenaufnahmeteil. Am oberen Ende der Vereinzelungseinheit ist eine Ausstossvorrichtung mit einem auf und ab bewegbaren Stössel angeordnet, wobei mit dem Stössel jeweils die erste Tülle in der Förderschiene der Transfereinrichtung zugeführt wird. Die Transfereinrichtung ist schrittweise um einen 90°-Winkel drehbar, wobei in einer ersten Stellung jeweils die Tülle auf den Dorn mittels des erwähnten Stössels geschoben wird. Nach einer Drehung um 90° wird in einer zweiten Stellung der Transfereinheit die Tülle zum Zwecke des Aufweitens auf einen Bereich des Dorns geschoben, der einen grösseren Durchmesser aufweist. Die eigentliche Bestückung des Kabelendes mit der Tülle erfolgt in einer dritten Stellung. In dieser dritten Stellung der Transfereinrichtung wird die Tülle vom Dorn unter Verwendung des Bestückungskopfs abgezogen, die Tülle auf die Spreizhülse aufgeschoben, die Tülle in aufgeweitetem Zustand auf das Kabel platziert und schliesslich darauf abgeschoben. Sobald der Dorn in die dritte Stellung geschwenkt wurde, umschliesst der Bestückungskopf mit der zweiteilig ausgeführten Spreizhülse und dem ebenfalls zweiteilig ausgebildeten Tüllenaufnahmeteil die Tülle. Die Trommel verfügt welche auf der Innenseite über Schaufeln, welche beim Drehen der Trommel die Tüllen hochfördern, um sie ungeordnet auf die Förderschienen fallen zu lassen. Tüllenmodule mit Trommeln haben sich zwar bewährt, sie zeichnen sich jedoch durch einen vergleichsweise grossen Platzbedarf und insbesondere durch eine breite Bauart aus.

Ein weiteres Tüllenmodul ist aus der EP 3 651 288 A1 bekannt geworden. Der Tüllenspeicher weist eine Trommel zur losen Bevorratung einer Vielzahl von Tüllen auf, eine in die drehende Trommel ragende Förderschiene zur lagerichtigen Speicherung und Weiterbeförderung der Tüllen und eine Vereinzelungseinheit mit einer Ausstossvorrichtung, mittels der jeweils die erste Tülle in der Förderschiene dem Tüllenbestückungsmodul zugeführt wird.

Die JP H05 299149 A zeigt ein Tüllenmodul mit einem nicht näher beschriebenen Tüllenmagazin, von welchem Tüllen jeweils einzeln mittels Druckluft über eine Führungsdüse zu einer ein Paar von Nadelabschnitten aufweisenden Nadel einer Tüllenbestückungseinrichtung zugeführt werden. Diese Nadel mit der von ihr gehaltenen Tülle kann dann über eine Schwenkbewegung auf eine gegenüberliegende Seite der Tüllenbestückungseinrichtung gebracht werden, wo die Tülle schliesslich auf ein Kabel gebracht werden kann.

Es ist eine Aufgabe der vorliegenden Erfindung ein verbesserte Tüllenmodul zu schaffen, das sich durch einen geringen Platzbedarf auszeichnet und insbesondere eine schmale Bauart ermöglicht.

Diese und andere Aufgaben werden erfindungsgemäss mit einem Tüllenmodul mit den Merkmalen des Anspruchs 1 gelöst.

Das Tüllenmodul umfasst einen Tüllenbehälter zur losen Aufnahme oder Bevorratung von Tüllen als Schüttgut, eine um eine Drehachse drehbaren Fördereinrichtung und eine sich entlang einer Längsrichtung erstreckenden Förderschiene. Mittels der Fördereinrichtung sind Tüllen vom Tüllenbehälter zur Förderschiene förderbar. Dabei kann die Förderschiene zum lagerichtigen Fördern von Tüllen zu einer Tüllenbestückungseinrichtung ein an sich bekannter Schwingförderer sein oder einem solchen Schwingförderer zugehörig sein. Dadurch, dass die Fördereinrichtung durch ein Tüllenförderrad gebildet ist, dessen Drehachse quer und besonders bevorzugt rechtwinklig zur Längsrichtung verläuft, kann ein kompaktes Tüllenmodul geschaffen werden, das sich insbesondere hinsichtlich Breite durch geringe Abmessungen auszeichnet bzw. schmal ist. Das mittels eines Antriebs drehbare Tüllenförderrad kann vorzugsweise mit dem feststehenden Tüllenbehälter verbunden sein oder in diesem integriert sein. Ein weiterer Vorteil des Tüllenförderrads besteht darin, dass es einfach aufgebaut und kostengünstig ist und zuverlässig betrieben werden kann.

Das Tüllenförderrad kann um eine horizontale Drehachse drehbar sein, wodurch mittels des Tüllenförderrad sich eine vertikale Förderung ergibt. Der Eintrag von Tüllen in Bezug auf das Tüllenförderrad ist demnach unten, der Austrag von Tüllen ist oben. Der Eintrag kann sich am Boden oder in Bodennähe des Tüllenbehälters befinden. Über den Austrag gelangen die Tüllen zur Förderschiene.

Das Tüllenmodul kann Bestandteil einer Tüllenstation zur Bestückung von Kabeln sein. Die Tüllenstation kann dabei eine Tüllenbestückungseinrichtung zum Bestücken von Kabelenden von Kabeln mit Tüllen aufweisen. Weiter kann die Tüllenstation eine Tüllenbereitstellungseinrichtung zum Bereitstellen von Tüllen für die Bestückung mit der Tüllenbestückungseinrichtung auf. Die vorgängig erwähnten Komponenten des Tüllenmoduls, also der Tüllenbehälter, das Tüllenförderrad und die Förderschiene des Schwingförderers, wären der erwähnten Tüllenbereitstellungseinrichtung zugeordnet. Auf der Tüllenbestückungseinrichtung können Bestückungswerkzeuge, wozu beispielsweise eine Transfereinheit mit einem Dorn oder gegebenenfalls mit mehreren Dorne, auf den bzw. die Tüllen aufschiebbar sind, gehört, montiert sein. Denkbar ist weiterhin, dass das Tüllenmodul oder die Tüllenstation mit dem Tüllenmodul Bestandteil einer Kabelkonfektionieranlage sein kann. Das hier beschriebene Tüllenmodul oder die Tüllenstation muss somit nicht unbedingt als alleinstehende Kabelbearbeitungsmaschine ausgestaltet sein.

Das Tüllenförderrad kann ein im Wesentlichen scheiben- oder ringförmiges Bauteil mit kreisförmiger Kontur sein. Das Tüllenförderrad kann einstückig ausgestaltet sein. Es kann aus einem harten oder biegesteifen Material, z.B. Aluminium, Stahl oder einem Hartplastik, gefertigt sein.

Gemäss einer ersten Ausführungsform kann das Tüllenförderrad einen ringförmigen Grundkörper aufweisen, an welchem Grundkörper mehrere, vorzugsweise gleichmässig auf dem Ring verteilte Förderaufnahmen oder Kammern für Tüllen angeordnet sind. Das Tüllenförderrad kann mehrere Förderaufnahmen für Tüllen aufweisen. Förderaufnahmen können beispielsweise schaufelförmig ausgestaltet sein.

Das Tüllenförderrad weist wenigstens eine wannenartige Ausnehmung, vorzugsweise wenigstens drei wannenartige Ausnehmungen und besonders bevorzugt wenigstens drei wannenartige Ausnehmungen als Förderaufnahmen zum Bilden jeweils einer Kammer für Tüllen auf.

Eine besonders kompakte und schmal gebautes Tüllenmodul kann geschaffen werden, wenn das Tüllenförderrad des Tüllenmoduls ein um eine horizontale Drehachse drehbares Tüllenförderrad ist und wenn die wenigstens eine Ausnehmung zu einer horizontalen, koaxial zur Drehachse verlaufenden Seite hin offen ist. Diese Ausnehmungen sind mit anderen Worten an einer planen Ringflanschseite angeordnet, die auf einer Ebene liegt, deren Flächennormale koaxial zur Drehachse des Tüllenförderrads ist. Die Förderschiene kann dabei in horizontaler, jedoch bevorzugt quer und besonders bevorzugt rechtwinklig zur Drehachse des Tüllenförderrads verlaufend im Tüllenmodul angeordnet sein.

Vorzugsweise kann die jeweilige Ausnehmung einen durch einen vorzugsweise radialen Trennsteg gebildeten, vorzugsweise in durch die Drehachse vorgegebenen axiale Richtung verlaufenden rückseitigen Endwandabschnitt aufweisen, über welchen die Tüllen bei der Drehung mitgenommen bzw. durch Schieben gefördert werden können.

Die jeweilige Ausnehmung kann weiter eine Begrenzungsabschnitt aufweisen, die an den Endwandabschnitt anschliesst und die den Wannenboden ausbilden kann.

Die jeweilige Ausnehmung kann einen sich in axialer Richtung erstreckenden äusseren zylindrischen Seitenwandabschnitt aufweisen.

Somit kann die jeweilige Ausnehmung einen rückseitiger Endwandabschnitt, einen den Wannenboden bildenden oder an den Wannenboden vorderseitig anschliessenden Begrenzungssabschnitt und einen äusseren zylindrischen Seitenwandabschnitt aufweisen.

Die hier verwendeten Begriffe wie vorne bzw. vorderseitig einerseits und hinten bzw. rückseitig sind in Bezug auf die Förderdrehrichtung des Tüllenförderrads zu verstehen.

Besonders vorteilhat kann es sein, wenn die jeweilige Ausnehmung einen Begrenzungssabschnitt aufweist, welcher Begrenzungssabschnitt eine derart gekrümmte Begrenzungsfläche, also die Oberfläche des Begrenzungssabschnitts, aufweist, dass sich vom rückseitigen, durch den Endwandabschnitt vorgegebenen Ende zum vorderseitigen Ende hin die Ausnehmung betreffend Tiefe sich verjüngend ausgestaltet ist. Auf diese Weise kann ein zuverlässiger und störungsfreier Betrieb sichergestellt werden. Durch diese Formgebung kann ein unerwünschtes Verklemmen von Tüllen bei drehendem Tüllenförderrad verhindert werden.

Bevorzugt hat der Begrenzungssabschnitt eine kegelförmige, konkave Oberfläche, wodurch besonders einfach ein zuverlässiger und störungsfreier Betrieb des Tüllenmoduls sichergestellt werden kann.

Der Tüllenbehälter kann einen Behälterboden und eine beispielsweise in etwa vertikale und vorzugsweise im Wesentlichen plane Tüllenbehälter seitenwand umfassen. In diesem Fall kann das Tüllenförderrad auf einer dieser Tüllenbehälter seitenwand gegenüberliegenden Seite des Tüllenbehälters angeordnet sein. Diese Tüllenbehälter seitenwand kann vorzugsweise parallel zur Längsrichtung verlaufen.

Der Tüllenbehälter kann weiter eine schräge Behälterwand aufweisen. Dank der schrägen Tüllenbehälter wand kann erreicht werden, dass Tüllen nicht in unerwünschter Weise auf der Behälterwand bleiben und nach unten zum Behälterboden hin sich ansammeln. Die schräge Tüllenbehälter wand kann dabei eine Wand sein, die die vorgängig erwähnte vertikale und/oder parallel zur Längsrichtung verlaufende Behälterseitenwand mit der dem Tüllenförderrad zugeordneten gegenüberliegenden Seite des Tüllenbehälters verbindet.

Der Tüllenbehälter kann einen an das Tüllenförderrad angepassten runden Behälterboden aufweisen.

Weiter kann es vorteilhaft sein, wenn der Tüllenbehälter zum Bilden einer Einfüllöffnung nach oben hin offen ist. Dank dieser Anordnung können einfach Tüllen auch während laufendem Betrieb nachgefüllt werden.

Das Tüllenmodul kann einen Antrieb zum Drehen des Tüllenförderrads umfassen. Beispielsweise kann das Tüllenförderrad am Umfang mit einer Aussenverzahnung versehen sein. Zum Drehen des Tüllenförderrads kann ein über einen Antrieb antreibbares Ritzel mit der Aussenverzahnung in Wirkverbindung stehen. Anstelle der Aussenverzahnung ist eine Innenverzahnung oder eine andere Kopplung mit einem Antrieb vorstellbar. Alternativ könnte das Tüllenförderrad starr mit einer Achse verbunden sein und diese Achse über ein Getriebe oder allenfalls sogar getriebelos mit einem Antrieb, beispielsweise einem Synchronmotor verbunden sein.

Das Tüllenmodul kann ein an das Tüllenförderrad anschliessende, aber nicht mit dieser verbundene Rampe umfassen, über die die Tüllen am Austrag des Tüllenförderrads die Tüllen in Richtung der Förderschiene geführt werden. Dabei kann die Rampe derart oberhalb der Förderschiene positioniert sein und enden, so dass die Tüllen auf diese runterfallen oder absatzlos darauf gelangen.

Weitere Einzelmerkmale und Vorteile der Erfindung ergeben sich aus der nachfolgenden Beschreibung eines Ausführungsbeispiels und aus den Zeichnungen. Es zeigen:
- Figur 1:: eine perspektivische Darstellung eines Tüllenmoduls,
- Figur 2:: das Tüllenmodul gemäss Fig. 1, jedoch mit entfernter Behälterseitenwand,
- Figur 3:: ein Tüllenförderrad des Tüllenmodul gemäss Fig. 1, und
- Figur 4:: eine Querschnittsdarstellung durch das Tüllenmodul mit dem Tüllenförderrad.

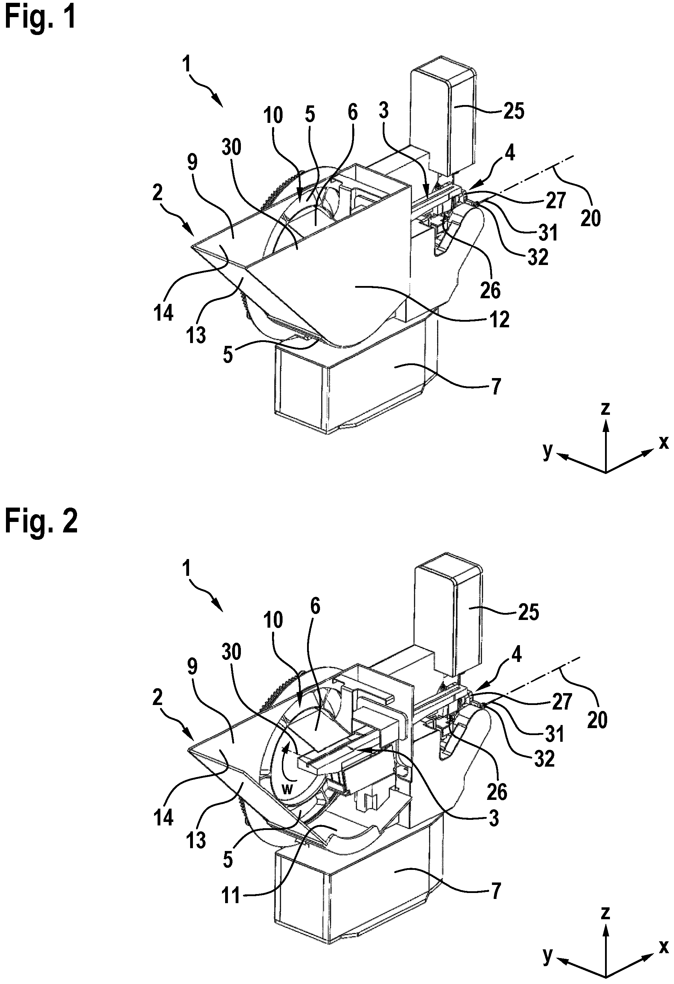

Figur 1 zeigt ein Tüllenmodul 1 mit einem feststehenden Tüllenbehälter 2 zur losen Aufnahme oder Bevorratung von Tüllen als Schüttgut. Das Tüllenmodul 1 verfügt weiter einen an sich bekannten Schwingförderer mit einer mit 3 bezeichneten entlang einer Längsrichtung 20 sich erstreckenden Förderschiene zum lagerichtigen Fördern von Tüllen zu einer Tüllenbestückungseinrichtung 4. Mittels einer nachfolgend im Detail beschriebenen Fördereinrichtung werden (nicht dargestellte) Tüllen vom Tüllenbehälter 2 zur Förderschiene 3 gefördert. Die erwähnte Fördereinrichtung ist durch ein Tüllenförderrad 10 gebildet ist. Das um eine horizontale Drehachse 30 drehbare Tüllenförderrad 10 ist auf einer Seite des Tüllenbehälters 2 angeordnet. Die Drehachse 30 erstreckt sich ersichtlicherweise in einer Richtung rechtwinklig zur Längsrichtung 20. Das in den Figur 1 und 2 gezeigte kartesische Koordinatensystem mit den Achsen x-y-z dient als Hilfestellung für das Verständnis der Richtungen. Die Längsrichtung 20 verläuft in x-Richtung, die Drehachse 30 verläuft in y-Richtung.

Vorliegend umfasst das Tüllenmodul 1 weiter die Tüllenbestückungseinrichtung 4 zum Bestücken von Kabelenden von Kabeln 31 mit Tüllen 32. Die oben erwähnten Komponenten Tüllenbehälter 2, Tüllenförderrad 10 und Förderschiene 3 sind einer Tüllenbereitstellungseinrichtung zum Bereitstellen von Tüllen für die Bestückung mit der Tüllenbestückungseinrichtung 4 zugeordnet. Das in Figur 1 gezeigte Tüllenmodul 1 kann somit auch als Tüllenstation zur Bestückung von Kabeln bezeichnet werden. Die Tüllenstation mit Tüllenbereitstellungseinrichtung und Tüllenbestückungseinrichtung 4 weist weiter eine Tragstruktur 7 zum Tragen der Tüllenbestückungseinrichtung 4 und der Tüllenbereitstellungseinrichtung umfassend Tüllenbehälter 2, Tüllenförderrad 10 und Förderschiene 3 auf. Die Tüllenbestückungseinrichtung und die Tüllenbereitstellungseinrichtung sind vorliegend beispielhaft fest miteinander verbunden. Die beiden Einrichtungen bilden ein gemeinsames Tüllenmodul 1, das mit der Tragstruktur 7 verbunden ist. Das Tüllenmodul 1 könnte auch derart ausgestaltet sein, dass es an die Tragstruktur 4 angekoppelt und wieder von dieser abgekoppelt werden kann. Vorstellbar ist weiterhin, dass Tüllenbehälter 2, Tüllenförderrad 10 und Förderschiene 3 einem Tüllenmodul zugeordnet sind, das als eigenständige Einheit ausgestaltet ist, die mit einer separaten Tüllenbestückungseinrichtung angekoppelt und wieder von dieser abgekoppelt werden kann. Schliesslich könnte das Tüllenmodul 1 bzw. die Tüllenstation Teil einer (nicht dargestellten) Kabelkonfektionieranlage sein. Die beispielsweise als Schwenkmaschine ausgeführte Kabelkonfektionieranlage zum Konfektionieren von Kabeln kann eine Zuführeinheit mit Richtanordnung, beispielsweise als Bandförderer ausgestaltete Kabelfördermittel, welches die Kabel zu einer Schwenkeinheit bringen. Die Schwenkeinheit verfügt über einen Greifer zum Halten des Kabels. Eine Abisolierstation zum Ablängen und Abisolieren der Kabel kann auf der Maschinenlängsachse angeordnet. Neben der Maschinenlängsachse können Crimpstationen und eben Tüllenstationen in der Art des Tüllenmoduls 1 angeordnet sein. Solche Kabelkonfektionieranlagen sind zum Beispiel in der EP 1 251 605 A1 beschrieben, wobei die vorliegende Kabelkonfektionieranlage das neuartige Tüllenmodul 1 aufweist. Durch die kompakte und insbesondere schmale Bauweise des Tüllenmoduls 1 ist es möglich, die Kabelkonfektionieranlage im Vergleich zu konventionellen Kabelkonfektionieranlage mit noch mehr Tüllenmodulen 1 zu versehen, wodurch die Variabilität der Kabelkonfektionieranlage weiter erhöht werden kann.

In einer vorteilhaften Ausführungsvariante können das Tüllenförderrad 10, der Tüllenbehälter 2 und die Förderschiene 3 zusammen mit einem Aktuator zum Erzeugen der Schwingungen für die lineare Förderung der Tüllen in der Förderschiene eine Einheit bilden, welche als Ganzes ausgetauscht werden kann, um das Tüllenmodul 1 schnell auf eine andere Tülle umzurüsten.

Der Tüllenbehälter 2 weist einen Behälterboden 11 und eine vertikale und im Wesentlichen plane Tüllenbehälter seitenwand 12. Die mit 12 bezeichnete Behälterseitenwand 12 ist dabei ersichtlicherweise parallel zur durch die Förderschiene 3 vorgegebene Längsrichtung 20 orientiert. Auf der der parallel zur Längsrichtung verlaufenden Behälterseitenwand 12 gegenüberliegenden Seite des Tüllenbehälters ist das Tüllenförderrad 10 angeordnet. Auf dieser Seite weist der Tüllenbehälter 2 eine Behälterseitenwand 14 mit einer kreisrunden Öffnung für das Tüllenförderrad 10 auf. Zwischen den beiden in etwa planparallel zueinander verlaufenden Behälterseitenwänden 12 und 14 befindet sich eine schräge Behälterwand 13, die die Wände 12, 14 miteinander verbindet.

Figur 2 zeigt das Tüllenmodul 1 zum besseren Verständnis des Aufbaus und Wirkungsweise mit entfernter bzw. unsichtbar gemachter Behälterseitenwand 12. Hieraus ist etwa erkennbar, dass der Behälterboden 11 an das Tüllenförderrad 10 angepasst ist und rund ausgestaltet ist.

Das Tüllenförderrad 10 weist wannenartige Ausnehmungen 5 zum Bilden von Kammern für Tüllen auf. Die Ausnehmungen 5 sind zur horizontalen Seite gegen den Innenraum des Tüllenbehälters hin offen. Der Eintrag von Tüllen in das während dem Betrieb in Drehrichtung ω drehende Tüllenförderrad 10 ist unten im Bereich des runden Behälterbodens 11, der Austrag von Tüllen ist oben. Beim Tüllenaustrag befindet sich eine Rampe 6, über die die Tüllen zur Förderschiene 3 geführt werden.

Am Ende der Förderschiene 3 ist eine Vereinzelungseinheit 25 angeordnet. Über die Förderschiene 3 werden die Tüllen lagerichtig zur Vereinzelungseinheit 25 gefördert, von welcher Tüllen jeweils einzeln auf einen Dorn einer Transfereinheit 26 aufgeschoben werden. Die Vereinzelungseinheit 25, die Transfereinheit 26 mit dem Dorn sind Bestandteile der Tüllenbestückungseinrichtung 4, die weiter einen Bestückungskopf 27 umfasst. Beispielsweise könnte die Tüllenbestückungseinrichtung 4 eine Tüllenbestückungseinrichtung, wie sie in EP 3 651 288 A1 gezeigt und beschrieben ist. Die Tüllenbestückungseinrichtung der Tüllenstation könnte auch mehrere Dorne aufweisen, wie etwa die aus der EP 0 626 738 B1 bekannt gewordene Tüllenbestückungseinrichtung mit den vier Domen. Der genaue Aufbau und Wirkweise von Tüllenbestückungseinrichtungen ist aus den genannten Druckschriften entnehmbar, auf welche verwiesen wird.

Der Tüllenbehälter 2 dient als Speicher für die zu verarbeitenden losen Tüllen und ist so ausgebildet, dass die beim Sortiervorgang aus der Förderschiene 3 fallenden oder ausgeblasenen Tüllen und auch die neben die Förderschiene fallenden Tüllen aufgenommen werden können. Der Tüllenbehälter 2 ist derart ausgebildet, sodass die Tüllen durch die Schwerkraft in Richtung der am tiefsten liegenden Kammer beim Tülleneintrag geleitet werden. Die über der Förderschiene 3 angeordnete Rampe 6 dient dazu, die aus den Kammern des Tüllenförderrads 10 fallenden Tüllen in idealer Weise auf das vordere Ende der Förderschiene 3 zu leiten. Der Tüllenbehälter 2 kann weitere, nicht dargestellte, Innenkonturen aufweisen, um die Tüllen zu leiten oder den Innenraum zu unterteilen.

Der Tüllenbehälter 2 ist zum Bilden einer Einfüllöffnung 9 zum Befüllen oder Nachfüllen von Tüllen nach oben hin offen ausgebildet. Selbstverständlich wäre es auch vorstellbar, den Tüllenbehälter 2 mit einem Deckel auszurüsten, um die Einfüllöffnung 9 zu verschliessen.

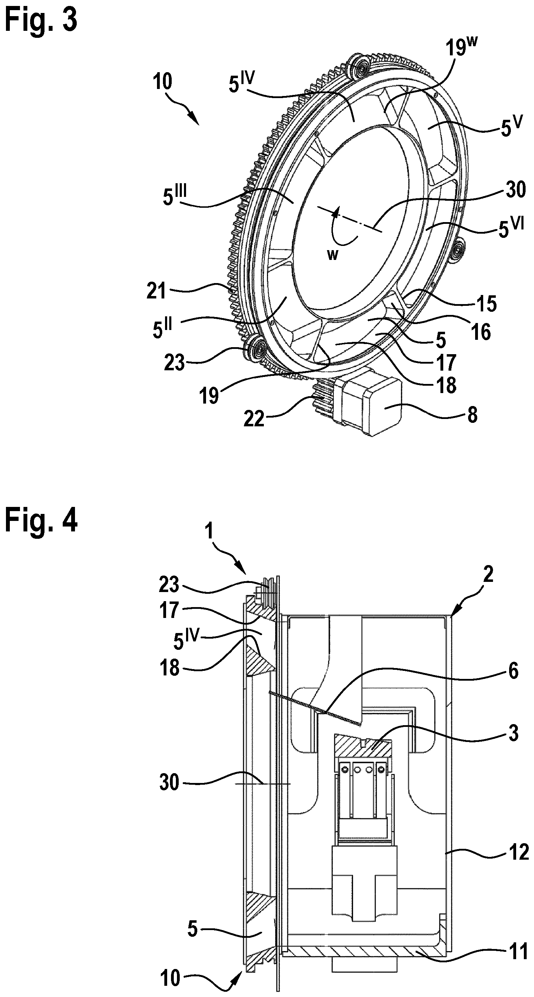

Konstruktive Details zum Tüllenmodul 1 sind aus den Figuren 3 und 4 entnehmbar. Figur 3 ist etwa gezeigt, wie das Tüllenförderrad 10 angetrieben wird. Das Tüllenmodul 1 umfasst einen Antrieb 8 zum Drehen des Tüllenförderrads. Dieser kann beispielsweise ein Elektromotor sein. Das Tüllenförderrad 10 ist am Umfang mit einer Aussenverzahnung 21 versehen. Zum Drehen des Tüllenförderrads 10 steht ein über den Antrieb 8 antreibbares Ritzel 22 mit der Aussenverzahnung 21 in Wirkverbindung. Alternativ wäre beispielsweise auch ein Reibradantrieb möglich. Für die Lagerung und Führung des Tüllenförderrad 10 während der Drehbewegung sind Lagerrollen 23 vorgesehen.

Das Tüllenförderrad 10 ist einstückig ausgestaltet und aus einem harten oder biegesteifen Material (z.B. Aluminium, Stahl, oder einem Hartplastik) gefertigt. Das Tüllenförderrad 10 ist vorliegend ein ringförmiges Bauteil mit in der Ansicht in Richtung der Drehachse 30 kreisförmigen Kontur. Am ringförmigen Grundkörper des Tüllenförderrads 10 sind beispielhaft sechs wannenartige Ausnehmungen 5 als Kammern für Tüllen angeordnet, die gleichmässig auf dem Ring verteilt sind. Diese Ausnehmungen 5 sind an einer planen Ringflanschseite des Tüllenförderrads 10 angeordnet, die auf einer Ebene liegt, deren Flächennormale koaxial zur Drehachse 30 ist. Diese sechse Ausnehmungen sind alle gleichartig ausgestaltet und mit 5, S^{II}, S^{III}, 5^{IV}, 5^{V}, 5^{VI} bezeichnet.

Die jeweilige Ausnehmung 5 weist einen durch einen radialen Trennsteg 15 gebildeten, in axialer Richtung 30 verlaufenden rückseitigen Endwandabschnitt 16 auf, über welchen die Tüllen bei der Drehung in Drehrichtung ω mitgenommen werden. Die Ausnehmung 5 weist weiter einen sich in axialer Richtung erstreckenden äusseren zylindrischen Seitenwandabschnitt 17 auf. Dieser Seitenwandabschnitt 17 liegt auf einem Zylinder mit koaxial zur Drehachse 30 verlaufenden Zylinderachsen. Die Vorderseite der Ausnehmung ist in Figur 3 anhand der Ausnehmung 5^{IV} mit 19^{IV} bezeichnet. Sodann weist die jeweilige Ausnehmung 5 einen Begrenzungssabschnitt 18 aufweist, welcher eine derart gekrümmte Begrenzungsfläche verfügt, dass sie sich vom rückseitigen Ende zum vorderseitigen Ende hin betreffend Tiefe der Ausnehmung verjüngend ausgestaltet ist. Der Begrenzungssabschnitt 18 hat im vorliegenden Ausführungsbeispiel eine kegelförmige, konkave Oberfläche, wodurch ein störungsfreier Betrieb sichergestellt werden kann. Dank der speziellen Formgebung der Ausnehmung mit dem kegelförmigen Begrenzungssabschnitt 18 ergibt sich, wie etwa aus Figur 4 entnehmbar ist, dass Tüllen beim Austrag über den schräg nach unten fallenden Begrenzungssabschnitts 18^{IV} ohne weiteres wieder die Kammer nach erfolgter vertikaler Förderung verlassen können. Die kegelförmigen Flächen der Begrenzungssabschnitt 18 haben die Funktion, ein Einklemmen der Tüllen zwischen den Trennstegen 15 und feststehenden Teilen, wie der Rampe 6 im Tüllenbehälter 2 zu verhindern.

## Patentansprüche

1. Tüllenmodul (1) mit einer Tüllenbestückungseinrichtung (4) zum Bestücken von Kabelenden von Kabeln (31) mit Tüllen (32), einem Tüllenbehälter (2) zur losen Aufnahme von Tüllen als Schüttgut, einer um eine Drehachse drehbaren Fördereinrichtung und einer sich entlang einer Längsrichtung (20) erstreckenden Förderschiene (3), wobei mittels der Fördereinrichtung Tüllen vom Tüllenbehälter (2) zur Förderschiene (3) förderbar sind, **dadurch gekennzeichnet, dass** die Fördereinrichtung durch ein Tüllenförderrad (10) gebildet ist, wobei das Tüllenförderrad (10) wenigstens eine wannenartige Ausnehmung, vorzugsweise wenigstens drei wannenartige Ausnehmungen und besonders bevorzugt wenigstens drei wannenartige Ausnehmungen (5) zum Bilden jeweils einer Kammer für Tüllen aufweist und wobei die Drehachse (30) des Tüllenförderrads (10) quer und besonders bevorzugt rechtwinklig zur Längsrichtung (20) verläuft.

2. Tüllenmodul (1) nach Anspruch 1, **dadurch gekennzeichnet, dass** das Tüllenförderrad (10) einen ringförmigen Grundkörper aufweist, welchem mehrere Kammern für Tüllen zugeordnet sind, die vorzugsweise gleichmässig verteilt auf dem Ring angeordnet sind.

3. Tüllenmodul (1) nach Anspruch 1 oder 2, **dadurch gekennzeichnet, dass** das Tüllenförderrad eine um eine horizontale Drehachse (30) drehbare Tüllenförderrad (10) ist und dass die wenigstens eine Ausnehmung (5) zu einer horizontalen Seite hin offen ist.

4. Tüllenmodul (1) nach einem der Ansprüche 1 bis 3, **dadurch gekennzeichnet, dass** die jeweilige Ausnehmung (5) einen durch einen Trennsteg (15) gebildeten, vorzugsweise in axialer Richtung (30) verlaufender rückseitigen Endwandabschnitt (16) aufweist.

5. Tüllenmodul (1) nach einem der Ansprüche 1 bis 4, **dadurch gekennzeichnet, dass** die jeweilige Ausnehmung (5) einen Begrenzungssabschnitt (18) aufweist, welcher eine derart gekrümmte Begrenzungsfläche aufweist, dass sie sich vom rückseitigen Ende zum vorderseitigen Ende hin die Ausnehmung (5) betreffend Tiefe verjüngend ausgestaltet ist.

6. Tüllenmodul (1) nach Anspruch 5, **dadurch gekennzeichnet, dass** der Begrenzungssabschnitt (18) eine kegelförmige, konkave Oberfläche hat.

7. Tüllenmodul (1) nach einem der Ansprüche 1 bis 6, **dadurch gekennzeichnet, dass** der Tüllenbehälter (2) eine Tüllenbehälter seitenwand (12) umfasst und dass auf einer der Tüllenbehälter seitenwand gegenüberliegenden Seite des Tüllenbehälter s das Tüllenförderrad (10) angeordnet ist.

8. Tüllenmodul (1) nach einem der Ansprüche 1 bis 7, **dadurch gekennzeichnet, dass** der Tüllenbehälter (2) eine schräge Tüllenbehälter wand (13) aufweist.

9. Tüllenmodul (1) nach einem der Ansprüche 1 bis 8, **dadurch gekennzeichnet, dass** der Tüllenbehälter (2) einen an das Tüllenförderrad (10) angepassten runden Behälterboden (11) aufweist.

10. Tüllenmodul (1) nach einem der Ansprüche 1 bis 9, **dadurch gekennzeichnet, dass** der Tüllenbehälter (2) zum Bilden einer Einfüllöffnung (9) nach oben hin offen ist.

11. Tüllenmodul (1) nach einem der Ansprüche 1 bis 10, **dadurch gekennzeichnet, dass** das Tüllenförderrad (10) am Umfang mit einer Aussenverzahnung (21) versehen ist und dass zum Drehen des Tüllenförderrads ein über einen Antrieb antreibbares Ritzel (22) mit der Aussenverzahnung in Wirkverbindung steht.

12. Tüllenmodul (1) nach einem der Ansprüche 1 bis 11, **dadurch gekennzeichnet, dass** das Tüllenmodul (1) ein an das Tüllenförderrad (10) anschliessende Rampe (6) aufweist, über die die Tüllen am Austrag des Tüllenförderrads (10) die Tüllen in Richtung der Förderschiene (3) geführt werden können.

## Claims

1. Grommet module (1) with a grommet fitting device (4) for fitting cable ends of cables (31) with grommets (32), a grommet container (2) for loosely receiving grommets as bulk material, a conveyor device that can rotate about an axis of rotation and a conveyor rail (3) extending along a longitudinal direction (20), wherein grommets can be conveyed from the grommet container (2) to the conveying rail (3) by means of the conveyor device, **characterized in that** the conveyor device is formed by a grommet conveyor wheel (10), wherein the grommet conveyor wheel (10) has at least one trough-like recess, preferably at least three trough-like recesses and particularly preferably at least three trough-like recesses (5) for forming in each case a chamber for grommets, and wherein the axis of rotation (30) of the grommet conveyor wheel (10) runs transversely and particularly preferably at a right angle to the longitudinal direction (20).

2. Grommet module (1) according to claim 1, **characterized in that** the grommet conveyor wheel (10) has a ring-shaped base body to which a plurality of chambers for grommets are assigned, which are preferably evenly distributed on the ring.

3. Grommet module (1) according to claim 1 or 2, **characterized in that** the grommet conveyor wheel is a grommet conveyor wheel (10) that can rotate about a horizontal axis of rotation (30) and **in that** the at least one recess (5) is open towards a horizontal side.

4. Grommet module (1) according to one of claims 1 to 3, **characterized in that** the respective recess (5) has a rear-side end wall section (16) formed by a separating bar (15) and preferably extending in the axial direction (30).

5. Grommet module (1) according to one of claims 1 to 4, **characterized in that** the respective recess (5) has a boundary section (18), which has a boundary surface curved such that it is designed to taper in terms of depth from the rear-side end towards the frontside end with respect to the recess (5).

6. Grommet module (1) according to claim 5, **characterized in that** the boundary section (18) has a conical, concave surface.

7. Grommet module (1) according to one of claims 1 to 6, **characterized in that** the grommet container (2) comprises a grommet container side wall (12) and **in that** the grommet conveying wheel (10) is arranged on a side, opposite the grommet container side wall, of the grommet container.

8. Grommet module (1) according to one of claims 1 to 7, **characterized in that** the grommet container (2) has an inclined grommet container wall (13).

9. Grommet module (1) according to one of claims 1 to 8, **characterized in that** the grommet container (2) has a round container base (11) adapted to the grommet conveyor wheel (10).

10. Grommet module (1) according to one of claims 1 to 9, **characterized in that** the grommet container (2) is open at the top for forming a filling opening (9).

11. Grommet module (1) according to one of claims 1 to 10, **characterized in that** the grommet conveyor wheel (10) is provided with an external toothing (21) on the circumference and **in that**, for rotating the grommet conveyor wheel, a pinion (22) that can be driven via a drive is operatively connected to the external toothing.

12. Grommet module (1) according to one of claims 1 to 11, **characterized in that** the grommet module (1) has a ramp (6) adjoining the grommet conveyor wheel (10), via which ramp the grommets at the discharge of the grommet conveyor wheel (10) the grommets can be guided in the direction of the conveyor rail (3).

## Revendications

1. Module à passe-câbles (1) comportant un dispositif d'équipement de passe-câbles (4) permettant d'équiper des extrémités de câbles de câbles (31) de passe-câbles (32), un réceptacle pour passe-câbles (2) destiné à recevoir en vrac des passe-câbles en tant que produits en vrac, un dispositif de transport pouvant tourner autour d'un axe de rotation et un rail de transport (3) s'étendant dans une direction longitudinale (20), dans lequel des passe-câbles peuvent être transportés depuis le réceptacle pour passe-câbles (2) jusqu'au rail de transport (3) au moyen du dispositif de transport, **caractérisé en ce que** le dispositif de transport est formé par une roue de transport de passe-câbles (10), dans lequel la roue de transport de passe-câbles (10) présente au moins un évidement en forme de cuvette, de préférence au moins trois évidements en forme de cuvette, et de manière particulièrement préférée au moins trois évidements (5) en forme de cuvette pour former respectivement une chambre pour des passe-câbles, et dans lequel l'axe de rotation (30) de la roue de transport de passe-câbles (10) s'étend transversalement, et de manière particulièrement préférée perpendiculairement, à la direction longitudinale (20).

2. Module à passe-câbles (1) selon la revendication 1, **caractérisé en ce que** la roue de transport de passe-câbles (10) présente un corps de base annulaire auquel sont associées plusieurs chambres pour des passe-câbles, lesquelles chambres sont de préférence réparties de manière régulière sur l'anneau.

3. Module à passe-câbles (1) selon la revendication 1 ou 2, **caractérisé en ce que** la roue de transport de passe-câbles est une roue de transport de passe-câbles (10) pouvant tourner autour d'un axe de rotation (30) horizontal **et en ce que** l'au moins un évidement (5) est ouvert vers un côté horizontal.

4. Module à passe-câbles (1) selon l'une des revendications 1 à 3, **caractérisé en ce que** l'évidement (5) respectif présente une section formant paroi d'extrémité arrière (16) formée par une nervure de séparation (15) et s'étendant de préférence dans la direction axiale (30).

5. Module à passe-câbles (1) selon l'une des revendications 1 à 4, **caractérisé en ce que** l'évidement (5) respectif présente une section de délimitation (18) qui présente une surface de délimitation courbée de telle sorte qu'elle est conçue pour se rétrécir en profondeur depuis l'extrémité arrière jusqu'à l'extrémité avant par rapport à l'évidement (5).

6. Module à passe-câbles (1) selon la revendication 5, **caractérisé en ce que** la section de délimitation (18) possède une surface concave de forme conique.

7. Module à passe-câbles (1) selon l'une des revendications 1 à 6, **caractérisé en ce que** le réceptacle pour passe-câbles (2) comprend une paroi latérale de réceptacle pour passe-câbles (12) **et en ce que** la roue de transport de passe-câbles (10) est disposée sur un côté du réceptacle pour passe-câbles opposé à la paroi latérale de réceptacle pour passe-câbles.

8. Module à passe-câbles (1) selon l'une des revendications 1 à 7, **caractérisé en ce que** le réceptacle pour passe-câbles (2) présente une paroi de réceptacle pour passe-câbles inclinée (13).

9. Module à passe-câbles (1) selon l'une des revendications 1 à 8, **caractérisé en ce que** le réceptacle pour passe-câbles (2) présente un fond de réceptacle (11) rond adapté à la roue de transport de passe-câbles (10).

10. Module à passe-câbles (1) selon l'une des revendications 1 à 9, **caractérisé en ce que** le réceptacle pour passe-câbles (2) est ouvert vers le haut pour former une ouverture de remplissage (9).

11. Module à passe-câbles (1) selon l'une des revendications 1 à 10, **caractérisé en ce que** la roue de transport de passe-câbles (10) est pourvue d'une denture extérieure (21) sur sa périphérie **et en ce que,** pour faire tourner la roue de transport de passe-câbles, un pignon (22) pouvant être entraîné par l'intermédiaire d'un moyen d'entraînement est en liaison active avec la denture extérieure.

12. Module à passe-câbles (1) selon l'une des revendications 1 à 11, **caractérisé en ce que** le module à passe-câbles (1) présente une rampe (6) raccordée à la roue de transport de passe-câbles (10), par l'intermédiaire de laquelle rampe les passe-câbles peuvent être guidés, les passe-câbles à la sortie de la roue de transport de passe-câbles (10), en direction du rail de transport (3).
